Europäisches Patentamt

European Patent Office

Office européen des brevets

(19)

(11) Publication number: **0 458 561 A1**

# (12) EUROPEAN PATENT APPLICATION

(21) Application number: **91304529.0**

(22) Date of filing: **20.05.91**

(51) Int. Cl.⁵: **C08F 220/58, C08F 220/36, D04H 1/64**

(30) Priority: **21.05.90 EP 90305453**

(43) Date of publication of application:
**27.11.91 Bulletin 91/48**

(84) Designated Contracting States:
**DE GB NL**

(71) Applicant: **VINAMUL LTD.**
**Mill Lane**
**Carshalton, Surrey SM5 2JU (GB)**

(72) Inventor: **Whaley, Christopher, Unilever Research**
**Port Sunlight Laboratory, Quarry Road East**
**Bebington, Wirral, Merseyside L63 3JW (GB)**

(74) Representative: **Roscoe, Brian Corrie et al**
**UNILEVER PLC Patents Division P.O. Box 68**
**Unilever House**
**London EC4P 4BQ (GB)**

(54) **Emulsion polymerisation.**

(57)    The copolymers formed by emulsion polymerisation may include a crosslinking agent to provide desired product properties. Widely used agents of this class, eg N-methylol acrylamide, will release formaldehyde during the crosslinking stage. Invention provides class, $CH_2=C(R)-CO-NH-O-R^1$, which provides post emulsion cross-linking with acceptor sites without release of formaldehyde.

EP 0 458 561 A1

FIELD OF THE INVENTION

This invention relates to emulsion polymerisation which provides emulsions having a cross-linking ability in a post-emulsification reaction. The post reaction cross-linking ability derives from the use of a vinyl monomer which contains a moiety capable of cross-linking. In particular the emulsions of the invention are usable as binders without the emission of formaldehyde during the self reactive cross-linking stage. This reduced emission of formaldehyde is of particular interest in the preparation of non-woven fabrics.

BACKGROUND OF THE INVENTION

It is known to use polymer emulsions as binders and in particular binders for non-woven fabrics. These latter are loosely assembled webs or masses of fibres which require binding together by some procedure in order to provide a physically coherent product. Bonded non-woven fabrics have advantages over woven fabrics for a number of uses and one procedure for bonding is by impregnating, printing or otherwise depositing an adhesive bonding composition onto the base web of the fibres. Usually this base web will comprise relatively long fibres including those of lengths from about 1 cm to about 7 cm or even more. These fibres may be of cellulosic or polymeric materials, eg polyesters, polyamides and polyacrylates. The base web of non-woven fibres can be initially produced by a variety of processes, of which air laying, carding, garnetting and paper making procedures are examples. In general, in comparison with woven fabrics, the bonded non-woven fabrics can be made in a greater range of thickness per unit of weight, with a more homogeneous structure, negligible unravelling tendency and with greater water absorbancy, porosity and resilience when required.

Particularly polymer emulsions used as binders will contain a cross-linking monomer to allow the binder to be cross-linked and hence form an effective physical bond after application. An example of a cross-linking agent is N-methylol acrylamide (NMA) but this has the disadvantage, shared with other cross-linking agents or systems, of releasing formaldehyde during the cross-linking stage. This formaldehyde may be released from the binder immediately on formation or could be extracted therefrom during subsequent contact with water.

GENERAL DESCRIPTION OF THE INVENTION

The invention provides derivatives of methacryl- or acrylhydroxamic acid having the general formula $CH_2=C(R)-CO-NH-O-R^1$ or $CH_2=C(R)-CO-X-R^2-CO-NH-OR^1$ wherein R is hydrogen or methyl; $R^1$ is a C2 to C4 acyl group, preferably acetyl, acetoacetyl or pivaloyl; $R^2$ is a substituted or unsubstituted C1 to C20 alkylene, or phenylene; and X is -O- or -NR- for use in emulsion polymerisation as a post polymerisation cross-linking agent.

The invention extends to a process of preparing a bound non-woven product wherein a non-woven web is contacted with an effective amount of a copolymer emulsion containing from about 1% to about 10% by weight of the monomer charge of the hydroxamic acid derivative defined above and then subsequently subjecting the product to a treatment step, eg heating, sufficient to provide cross-linking within the copolymer emulsion.

The monomer systems used in the emulsion polymerisation of the present invention will include a nucleophilic compound as an acceptor to react with the isocyanate group generated from the hydroxamic acid derivative during the post polymerisation treatment step. The nucleophilic acceptor may be any compound capable of undergoing free-radical addition copolymerisation which contains a free or latent carboxylic acid, hydroxyl, or primary or secondary amine function. Examples of such acceptors include methacrylic acid, hydroxyethyl acrylate, vinyl acetate, allylamine, acrylic acid, itaconic acid, crotonic acid, maleic acid, 2-hydroxyethyl methacrylate and hydroxypropyl methacrylate.

The monomers utilised in the preparation of the copolymer emulsion will be selected from those typically used in the preparation of such emulsions and will include vinyl C1 to C4 alkanoates, eg vinyl acetate, as a major component, i.e. 30% to 70%, and C1 to C4 alkylenes, preferably ethylene as the minor components. Other mnomers which can be used are C1 to C12 alkyl (meth)acrylates and styrene, Vinyl acetate is the preferred alkanoate but vinyl propionate, formate, butyrate and isobutyrate may also be used. Propylene, butylene and isobutylene are examples of alkylene monomers which are usable. The preferred alkyl (meth)acrylate is butyl acrylate. Vinyl chloride and alkyl maleates are also usable. Optionally the copolymer may contain minor monomer components, for example up to about 10% by weight of the total monomers. Examples of such monomers are (meth)acrylic acid, (meth)acrylamide, vinyl silanes, vinyl versatates, vinyl or acrylamido sulphates.

In general there is no restriction on the monomer composition in which the crosslinking monomers of the invention can be used provided an acceptor group is present for the crosslinking stage.

The process used in the preparation of the copolymer emulsions of the invention are those typically available in this technology and there is no criticality in the initiating systems or emulsifying agents used in the polymerisation process.

Methods of preparing the copolymer emulsions of the invention are well characterised in the literature. Polymer Synthesis (vols I and III) by Sandler & Karo (Academic Press 1974) and Preparative methods of Polymer Chemistry (2nd Ed) by Sorenson and Campbell (Interscience 1968) provide preparative information. Methoden der Organischen Chemie (Houben-Wey) Band XIV published by George Thieme Verlag Stuttgart (1961) also provides preparative descriptions.

## LITERATURE

Derivatives of hydroxamic acid are disclosed in a number of literature and patent articles, thus GB 887175 (ICI) describes polymers including alpha beta unsaturated hydroxamic acids and derivatives.

There is no disclosure of use of the defined cross-linking material to cross-link copolymer emulsions so as to provide formaldehyde free products. J. Org. Chem 26(1961)p 782/4 (Mukaiyama et al) describe the preparation of acetoacetyl hydroxamates but, as with the ICI disclosure, there is no suggestion to use the materials as cross-linking agents in emulsion polymers.

## SPECIFIC DESCRIPTION OF THE INVENTION

Examples of the compounds of the invention and their use in post polymerisation cross linking will now be given to illustrate but not limit the invention.

## Example 1

Prepaation of methyacrylhydroxamic acetoacetic anhydride.

In this compound R is methyl and $R^1$ is aceto-acetyl.

Methacryl hydroxamic acid (2.02g/20m.mol) was prepared as described in GB 852176 (ICI) and dissolved with 2,2,6-trimethyl-1,3-dioxin-4-one (2.84g/20mmol) in dichloromethane (20 ml) with stirring at room temperature under nitrogen. After complete solution was achieved the solvent was distilled off and the reaction temperature raised to 80°C in a water bath.

After $3\frac{1}{2}$ hours the reaction was quenched by cooling to -20°C and the mixture was separated by dry column flash chromatogrphy on silica (Merck Kieselgel 60H, ethyl acetate-petroleum ether (40-60) gradient elution). The product, methacrylhydroxamic acetoacetic anhydride, had an $R_F$ of 0.22 on thin layer chromatography on silica plates (1:1 ethyl acetate-petroleum ether (40-60) elution). Evaporation of the solvent gave the product as an amber oil (0.50g, 13.5%) which was characterised by 'H NMR spectroscopy and differential scanning calorimetry (DSC). The latter showed exothermic decomposition peaks at 112°C and 141°C, in good agreement with values published for similar anhydrides (Mukaiyama et al, J. Org. Chem., 26, 1961, 782).

## Example 2

The anhydride described in Example 1 is also prepared using the diketene route described by Mukaiyama in which diketene is reacted with the hydroxamic acid.

## Example 3

There now follows a description on the preparation of an emulsion polymer system incorporating methacrylhydroxamic acetic anhydride

## Preparation of Methacrylhydroxamic Acetic Anhydride

Methacrylhydroxamic acid (65.0g, 0.643 mol) was dissolved in acetic anhydride (65.65g, 0.643 mol) in a dry 500 ml round-bottomed flask. The reaction mixture was magnetically stirred for 45 hours, after which time the acetic acid by-product was removed by reduced pressure distillation (bath temperature: 20-30°C; pressure: 5-10 mbar). The crude product (93.8g) was solidified by cooling to -20°C and was then recrystallised, at reduced temperature, from diethyl ether-petroleum ether (40-60). The product was obtained as an off-white crytalline solid (73.6g, 80%), with a melting point very close to room temperature. Characterisation was by IR spectroscopy, DSC, and 'H NMR spectroscopy. NMR showed the product to be >96% pure and DSC showed a strongly exothermic decomposition peak at 157°C.

## Preparation of emulsion polymer

To a laboratory reactor (1 litre) was added a charge of 143gm deionised water. This was purged over the surface with nitrogen for a period of 30 minutes. A slow purge of nitrogen was maintained throughout the polymerisation. The temperature was adjusted to 20°C. A monomer charge was then prepared consisting of:

129.9gm of vinyl acetate
124gm of butyl acrylate
10.2gm of hydroxyethylacrylate
3.5gm of methacrylic acid
8.4gm of methacrylhydroxamic acetic anhydride

A water phase charge consisting of:

26gm of Synperonic NP30(70%) *
0.6gm of Gafac RE 610 **
2.6gm of N sodium hydroxide solution
77gm of water

was also prepared.

10% of the monomer charge and 10% of the water phase were then added to the reactor followed by the addition of 0.34gm of sodium persulphate in 1.66gm of water and 0.23gm of sodium formaldehyde sulphoxylate in 1.66gm of water. The reaction was allowed to exotherm. At peak temperature the continuous additions of the remainder of the monomer and water phase charge were commenced to last 2 hours at 50°C. These additions were accompanied by the additions of initiator solutions over 2 hours at 50°C consisting of 2.6gm of sodium persulphate in 25gm of water and 1.6gm of sodium formaldehyde sulphoxylate in 25gm of water. At the end of the continuous additions the reaction was held for a further 15 minutes at 50°C then cooled to below 30°C. The pH was adjusted to 5 to 5.5 with ammonia solution.

The final polymer had a non-volatile content of 50% and a polymer composition of vinyl acetate/butylacrylate/ methacrylic acid/hydroxyethylacrylate/N-methylhydroxamic acetate of 47.1/44.9/1.3/3/3.7 by weight.

The product was then tested for its binding properties when impregnated into filter paper. The polymer solids impregnated into filter paper amounted to approximately 20% of the weight of the paper. The latices were catalysed with paratoluenesulphonic acid (1% w/w polymer) and curing was on a roller at 165°C. The tensile properties of the polymers were measured on the Lloyd tensometer for strips of impregnated filter paper approximately 200 x 50 x 0.2mm. The testing was carried out on dry strips and also those submitted to water and acetone soaking. The breaking loads are given below:-

## BREAKING LOADS (N)

| DRY | WET | SOLVENT |
|-----|-----|---------|
| 203 | 43 | 28 |

## Example 4

### Preparation of Methacrylhydroxamic Pivalic Anhydride

In this compound R is methyl and $R^1$ is pivaloyl.

Methacrylhydroxamic acid (9.94g, 98.3 mmol) was dissolved in pivalic anhydride (18.31g, 98.3 mmol) in a dry 100 ml round-bottomed flask. The reaction mixture was magnetically stirred, under a nitrogen atmosphere, for 4 days. After this time the product was purified by dry column flash chromatography on silica (Merck Kieselgel 60H, ethyl acetate-petroleum ether (40-60) gradient elution). Residual pivalic acid by-product was removed under reduced pressure (0.66 mbar) at elevated temperature (30-40°C). The product was obtained as a white crystalline solid (14.70g, 81%), melting point 34-36°C. Characterisation was by IR spectroscopy, mass spectroscopy, DSC and $^1$H NMR spectroscopy. NMR showed the product to be >97% pure and DSC showed a strongly exothermic decomposition peak at 151°C.

* Synperonic NP30 (70%) is a nonionic surfactant obtainable from Cargo Fleet Chemicals Co Ltd.
** GAFAC RE 610 is a phosphate ester surfactant.

Example 5

The compound $CH_2=C(CH_3)-CO-O-(CH_2)_5-CO-NH-O-CO-CH_2COCH_3$ is prepared by reacting diketene and 6-methacryloxyhexano hydroxamic acid using the route described by Mukaiyama.

**Claims**

1. The use of methacryl or acryl hydroxamic acid derivatives having the general formula $CH_2=C(R)-CO-NH-O-R^1$ or $CH_2=C(R)-CO-X-R^2-CO-NH-OR^1$ where R is hydrogen or methyl; $R^1$ is a C2 to C4 acyl group, preferably acetyl, acetoacetyl or pivaloyl; $R^2$ is a substituted or unsubstituted C1 to C20 alkylene, or phenylene; and X is -O- or -NR- as post polymerisation cross-linking agents in emulsion polymerisation.

2. The preparation of a bound non-woven product wherein a non-woven web is contacted with an effective amount of a copolymer emulsion containing from about 1% to about 10% by weight of the methacryl or acryl hydroxamic acid derivative of claim 1, and then subjecting the product to a cross-linking treatment step.

European Patent
Office

## EUROPEAN SEARCH REPORT

Application Number

EP    91 30 4529

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-887175 (IMPERIAL CHEMICAL INDUSTRIES)<br>* page 1, line 9 - page 3, line 34; claims 1-4 *<br>--- | 1, 2 | C08F220/58<br>C08F220/36<br>D04H1/64 |
| A | EP-A-237643 (AIR PRODUCTS AND CHEMICALS INC.)<br>* page 3, line 11 - page 9, line 25; claims 1, 9, 12 *<br>----- | 1, 2 | |

TECHNICAL FIELDS
SEARCHED (Int. Cl.5 )

C08F
D04H

The present search report has been drawn up for all claims

| Place of search | Date of completion of the search | Examiner |
|---|---|---|
| THE HAGUE | 11 JULY 1991 | BLASBAND I. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P0401)

6